# FASCICULE DE BREVET EUROPEEN

(11) **EP 0 762 042 B1**
(45) Date de publication et mention de la délivrance du brevet: **07.07.1999**
(21) Numéro de dépôt: 96401839.4
(22) Date de dépôt: 28.08.1996
(51) Int. Cl.: F16L 58/18

(54) **Appareil d'enrobage d'une prise de branchement sur une canalisation**
Vorrichtung zur Umhüllung eines Rohrabzweigungsstückes an einer Rohrleitung
An apparatus for covering a branch pipe on a pipe

(30) Priorité: 12.09.1995 FR 9510678
(43) Date de publication de la demande: 12.03.1997
(73) Titulaire: GAZ DE FRANCE (SERVICE NATIONAL), F-75017 Paris (FR)
(72) Inventeur: Stringhetta, Sandrine, 92600 Asnières (FR)
(74) Mandataire: Lerner, François

(56) Documents cités:
- FR-A- 2 407 420
- GB-A- 1 130 344
- US-A- 3 367 358

## Description

L'invention concerne un appareil destiné à l'enrobage d'une prise de branchement à laquelle est raccordée une conduite de dérivation et d'une portion, située à proximité de la prise, d'une canalisation de distribution de fluide à laquelle la prise est fixée. Cet enrobage doit s'effectuer depuis la surface (sensiblement le niveau du sol), un puits d'accès autorisant l'enrobage de la prise et de la portion de canalisation situées toutes deux sous terre.

Dans la suite, les termes "supérieur" et "inférieur" devront être considérés au sens de la hauteur d'élévation, étant entendu que le puits d'accès est supposé avoir été creusé sensiblement verticalement.

Après avoir posé une prise de branchement sur une canalisation, il s'avère intéressant, notamment lorsque la canalisation et/ou la prise sont métalliques de constituer une couche protectrice contre la corrosion. Pour cela, la solution consistant à enrober la prise se révèle être efficace.

Mais, afin de réduire la gêne occasionnée à la circulation des piétons ou des véhicules, les perturbations sur l'environnement et le coût de réalisation d'un puits d'accès servant à la mise en place de prises de branchement puis à l'enrobage de celles-ci, on cherche à réduire les dimensions dudit puits. Ainsi, ce puits pourra n'avoir une section que d'environ quarante centimètres de côté, de telle sorte qu'il ne sera plus possible pour une personne, et a fortiori plusieurs, de descendre au fond du puits pour effectuer directement les opérations d'enrobage de la prise, telles que la mise en place correcte d'un moule, sa fermeture, son maintien en position fermée et le contrôle de l'obtention d'une bonne étanchéité du moule sachant qu'une personne placée en partie supérieure du puits d'accès n'a que la seule vision de dessus de l'enrobage. Pour résoudre ces différents problèmes, la solution de l'invention consiste en un appareil spécifique pour réaliser l'enrobage de la prise depuis le niveau du sol et comprenant :
- un support comportant un coffrage ouvert, des moyens pour descendre ou monter ledit coffrage dans le puits d'accès et des moyens pour maintenir le coffrage par rapport à la canalisation,
- un moule comportant deux demi-coquilles mobiles placées à l'intérieur du coffrage,
- des moyens pour déplacer les deux demi-coquilles l'une par rapport à l'autre,
- un orifice ménagé à travers le coffrage et les deux demi-coquilles pour permettre l'introduction d'une matière d'enrobage dans le moule.

Cette solution assure un maintien ferme entre les deux demi-coquilles constituant le moule et un maintien sûr entre le moule et la canalisation. L'opération d'enrobage est ainsi facilitée et fiabilisée puisque le risque de fuite de matière d'enrobage est très nettement minimisé. Cette solution possède, en outre, l'avantage de constituer une protection mécanique contre des coups de pierres lors du rebouchage du puits ou contre des coups de pioche lors d'un nouveau creusement. De plus, cet enrobage complète l'étanchéité entre la prise et/ou la canalisation et le milieu extérieur avec lequel elles sont en contact, évitant ainsi toute fuite de fluide circulant dans la canalisation due au vieillissement des organes d'étanchéité. La matière d'enrobage, thermodurcissable, est avantageusement constituée par une résine en polyuréthane, polyester, époxyde ou analogue et complétée par un durcisseur.

Il apparaît également intéressant de réduire la quantité de matière d'enrobage utilisée. Pour cela le moule possède extérieurement un creux en forme de portion de cylindre destiné à recevoir la canalisation et réserve intérieurement un espace reproduisant sensiblement la forme en creux de la prise de branchement de manière à enrober d'une épaisseur sensiblement constante de matière d'enrobage la prise de branchement. Ainsi, le moule reposera sur la partie supérieure de la canalisation et la partie inférieure de la canalisation ne sera pas enrobée.

Afin de réduire encore le risque de fuite, l'invention propose que le moule possède extérieurement un creux en forme de portion de cylindre propre à s'adapter sensiblement autour de la canalisation, et que le coffrage comporte des parois latérales dont une possède une rainure propre à permettre l'engagement à travers elle de la conduite de dérivation. Le positionnement du coffrage par rapport à la canalisation principale et à la conduite de dérivation, et donc par rapport à la prise de raccordement, depuis la partie supérieure du puits d'accès à l'aide des montants, s'en trouve ainsi facilité, ce qui réduit le risque de fuites consécutives d'un mauvais positionnement.

L'invention propose également solution pour mettre aisément en place l'appareil et réaliser un maintien efficace, étanche et fiable de celui-ci sur la canalisation. Pour cela,
- les moyens pour descendre ou monter le coffrage comprennent au moins un montant comportant à une extrémité inférieure un sabot de soutien propre à venir s'engager sous la canalisation et des moyens d'application d'une pression disposé sur ledit sabot de soutien en regard dudit coffrage,
- le coffrage est lié de façon pivotante au montant en un endroit intermédiaire entre ledit sabot de soutien et une extrémité supérieure du montant, et comporte des parois latérales dont l'une possède une rainure propre à permettre l'engagement à travers elle de la conduite de dérivation, et
- ledit moule possède extérieurement un creux en forme de portion de cylindre propre à s'adapter de façon sensiblement étanche vis-à-vis de la matière d'enrobage, autour de la canalisation, sous l'action desdits moyens d'application d'une pression.

Les différents avantages et caractéristiques de l'appareil selon l'invention apparaîtront plus clairement de la description qui suit de l'enrobage d'une prise de dérivation sur une conduite principale, faite en référence aux dessins annexés dans lesquels :
- la figure 1 représente une réalisation d'appareil d'enrobage en vue de face en coupe selon la ligne I-I de la figure 3,
- la figure 2 représente une réalisation d'appareil d'enrobage en vue de gauche en coupe selon la ligne II-II de la figure 1,
- la figure 3 représente une réalisation d'appareil d'enrobage en vue de dessus.

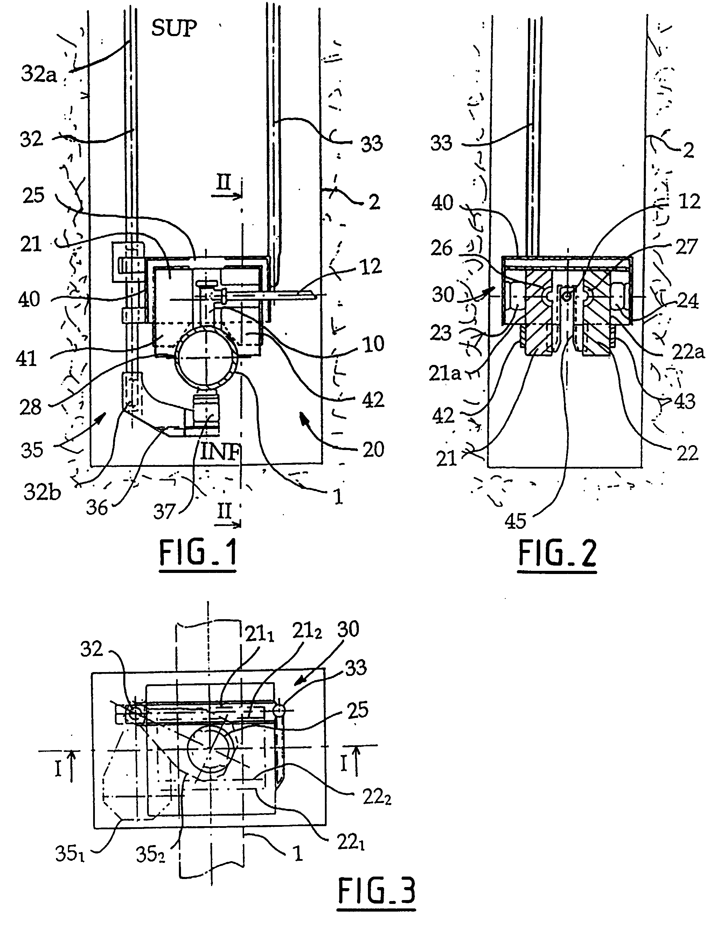

A la figure 1, on voit représenté un puits d'accès 2, un appareil d'enrobage 20 selon l'invention présentant des extrémités supérieure et inférieure repérées respectivement SUP et INF sur la figure 1, et une canalisation 1 sur laquelle est fixée une prise 10 à laquelle est raccordée une conduite de dérivation 12. Cet appareil 20, également illustré en figures 2 et 3, comporte un support 30, un moule comportant deux demi-coquilles 21, 22, des moyens 23, 24 pour déplacer les deux demi-coquilles et un orifice de remplissage 25 ménagé à travers le support et les deux demi-coquilles.

Le support 30 comprend un coffrage 40, deux montants de guidage 32, 33, l'un fixe et l'autre lié de façon pivotante au coffrage 40 en un endroit intermédiaire entre une extrémité supérieure 32a et une extrémité inférieure 32b. Ce coffrage 40 est ouvert, et est ici constitué de plaques soudées formant parois latérales comporte deux couples de joues 41, 42, 43 (un seul couple a été représenté) disposés symétriquement par rapport au plan de la figure 1 et paralèlement à deux parois latérales opposées, et une rainure 45 à travers laquelle passe la conduite de dérivation 12.

Les deux demi-coquilles 21, 22 sont réalisées en une matière élastiquement déformable et telle que les demi-coquilles ne soient pas réutilisables après emploi comme par exemple du polystyrène expansé. Elles sont symétriques l'une de l'autre par rapport à leur plan de joint commun, possèdent en partie inférieure un creux en forme de portion de cylindre 28 complémentaire de celle de la canalisation 1 et reproduisent sensiblement la forme en creux de la prise de branchement 10. Elles sont mises en place dans le coffrage 40 en appui en partie inférieure contre les joues 41, 42, 43 et en partie supérieure contre des moyens 23, 24 pour les déplacer, ici constitués par un premier 23 et un second 24 vérin pneumatique avantageusement alimentés par de l'air comprimé acheminé par l'intérieur du tube fixe 33. Ces premier et deuxième vérin 23, 24 disposés entre les demi-coquilles 21, 22 et les parois latérales correspondantes du coffrage 40 ont été légèrement déplacés pour améliorer la compréhension ; ils seraient avantageusement placés à l'aplomb de la canalisation 1.

L'évidement 28 en partie inférieure du moule 21, 22 de forme complémentaire de celle de la canalisation 1 et la rainure 45 disposée sur l'une des parois latérales du coffrage 40 permettent de facilement positionner, depuis la partie supérieure du puits d'accès à l'aide des montants 32, 33, le coffrage 40 par rapport à la canalisation principale 1 et à la conduite de dérivation 12, et donc par rapport à la prise de raccordement 10.

Le montant mobile 32 comporte en partie inférieure 32b des moyens 35 pour maintenir le coffrage 40 par rapport à la canalisation 1. Ces moyens de maintien 35 comprennent un sabot de soutien 36 et des moyens 37 disposés sur ledit sabot de soutien 36 en regard dudit coffrage 40, pour exercer une pression entre la canalisation et le moule 21, 22, lesdits moyens étant ici constitués par un troisième vérin pneumatique 37.

Après introduction des demi-coquilles 21, 22 dans le coffrage 40 et positionnement dudit coffrage 40 par dessus la canalisation 1 et autour de la conduite de dérivation 12 les deux demi-coquilles 21, 22 sont amenées au contact l'une de l'autre par alimentation en air comprimé des premier et deuxième vérins 23, 24. Les faces 21a, 22a des demi-coquilles en contact avec lesdits premier et deuxième vérins pneumatiques sont déplacées depuis les positions 21₁, 22₁ vers les positions 21₂, 22₂ représentées en figure 3. On déplace alors les moyens de maintien 35 entre les positions 35₁ et 35₂ représentées en figure 3, par rotation du montant mobile 32 par rapport au coffrage 40, de sorte que lesdits moyens de maintien 35, en particulier le sabot de soutien 36, viennent s'engager sous ladite canalisation 1. La mise sous pression du troisième vérin 37 serre la canalisation entre ledit troisième vérin et le moule 21, 22 afin de maintenir le coffrage 40 par rapport à la canalisation 1.

L'effort appliqué par les premier et deuxième vérins 23, 24 entre les deux demi-coquilles 21, 22 allié à l'élasticité du polystyrène expansé permet de réalisé une bonne étanchéité, sans nécessiter de conditions particulières de planéité sur les surfaces en vis-à-vis des demi-coquilles. De même, bien que les différentes canalisations 1 sur lesquelles on branche une prise de dérivation 10 présentent des formes approximatives et variables, l'élasticité du polystyrène expansé, éventuellement complété par de la mousse, permet de compenser ces écarts de forme sous l'effort du troisième vérin 37 pour réaliser l'étanchéité entre la canalisation 1 et les demi-coquilles 21, 22.

L'étanchéité entre les demi-coquilles et la conduite de dérivation est assurée par deux blocs de mousse 26, 27.

Le moulage de la matière d'enrobage depuis la partie supérieure du puits est facilité en introduisant dans l'orifice de remplissage 25 un tube (non représenté). Celle-ci ne recouvre que la partie supérieure de la canalisation 1.

On pourrait n'utiliser qu'un seul vérin pneumatique comme moyens pour déplacer les deux-demi-coquilles 21, 22 l'une par rapport à l'autre sans que cela ne modifie l'esprit de l'invention.

## Revendications

1. Appareil destiné à l'enrobage, sensiblement depuis le niveau du sol, d'une prise de branchement (10) à laquelle est raccordée une conduite de dérivation (12) et d'une portion, située à proximité de la prise, d'une canalisation (1) de distribution de fluide disposée sous terre et à laquelle la prise (10) est fixée, un puits d'accès (2) autorisant l'enrobage de la prise (10) et de la portion de canalisation, ledit appareil comprenant:
- un support (20) comportant un coffrage ouvert (40), des moyens (32, 33) pour descendre ou monter ledit coffrage (40) dans le puits d'accès (2) et des moyens (35) pour maintenir le coffrage (40) par rapport à la canalisation (1),
- un moule comportant deux demi-coquilles mobiles (21, 22) placées à l'intérieur du coffrage (40),
- des moyens (23, 24) pour déplacer les deux demi-coquilles (21, 22) l'une par rapport à l'autre, et
- un orifice (25) ménagé à travers le coffrage et le moule (21, 22) pour permettre l'introduction d'une matière d'enrobage dans ledit moule.

2. Appareil selon la revendication 1, caractérisé en ce que le moule (21, 22) possède extérieurement un creux en forme de portion de cylindre (28) propre à s'adapter sensiblement autour de la canalisation (1) et réserve intérieurement un espace reproduisant sensiblement la forme en creux de la prise de branchement (10).

3. Appareil selon la revendication 1, caractérisé en ce que:
- le moule (21, 22) possède extérieurement un creux en forme de portion de cylindre (28) propre à s'adapter sensiblement autour de la canalisation (1), et
- le coffrage (40) comporte des parois latérales dont l'une possède une rainure (45) propre à permettre l'engagement à travers elle de la conduite de dérivation (12).

4. Appareil selon la revendication 1, caractérisé en ce que :
- les moyens pour descendre ou monter le coffrage (40) comprennent au moins un montant (32, 33) comportant à une extrémité inférieure (32b) un sabot de soutien (36) propre à venir s'engager sous la canalisation (1) et des moyens d'application d'une pression (37) disposé sur ledit sabot de soutien (36) en regard dudit coffrage (40),
- le coffrage (40) est lié de façon pivotante au montant (32) en un endroit intermédiaire entre ledit sabot de soutien (36) et une extrémité supérieure (32a) du montant (32), et comporte des parois latérales dont l'une possède une rainure (45) propre à permettre l'engagement à travers elle de la conduite de dérivation (12), et
- ledit moule (21, 22) possède extérieurement un creux en forme de portion de cylindre (28) propre à s'adapter de façon sensiblement étanche vis-à-vis de la matière d'enrobage, autour de la canalisation, sous l'action desdits moyens d'application d'une pression (37).

5. Appareil selon l'une quelconque des revendications précédentes, caractérisé en ce que les moyens pour déplacer les deux demi-coquilles (21, 22) l'une par rapport à l'autre comprennent des vérins (23, 24) placés entre les demi-coquilles (21, 22) et le coffrage (40).

6. Appareil selon la revendication 4, caractérisé en ce que les deux demi-coquilles (21, 22) sont réalisés en une matière élastiquement déformable et telle que les demi-coquilles ne soient pas réutilisables après emploi comme par exemple du polystyrène expansé, l'étanchéité après fermeture du moule étant réalisée par l'association de l'élasticité de la matière du moule et de l'action combinée desdits moyens d'application de pression (37).

## Patentansprüche

1. Vorrichtung zur Umhüllung, im wesentlichen vom Bodenniveau ausgehend, eines Abzweigungsanschlußstückes (10), mit welchem eine Abzweigleitung (12) verbunden ist, und eines in der Nähe des Anschlußstückes gelegenen Teils einer Verteilungsrohrleitung (1) für Fließmittel, die unter der Erde angeordnet ist und an welcher das Anschlußstück (10) befestigt ist, wobei ein Zugangsschacht (2) die Umhüllung des Anschlußstückes (10) und des Teils der Rohrleitung gestattet, wobei die Vorrichtung aufweist:
- eine Stütze (20) mit einer offenen Schalung (40), Mittel (32, 33) zum Senken und Heben der Schalung (40) in den Zugangsschacht (2) und Mittel (35), um die Schalung (40) bezüglich der Rohrleitung (1) zu halten,
- eine Form mit zwei beweglichen Matrizen (21, 22), die im Inneren der Schalung (40) angeordnet sind,
- Mittel (23, 24), um die zwei Matrizen (21, 22) bezüglich einander zu verschieben, und
- eine Öffnung (25), die quer durch die Schalung und die Form (21, 22) ausgespart ist, um die Einführung eines Umhüllungsmaterials in die Form zu erlauben.

2. Vorrichtung nach Anspruch 1, dadurch gekennzeichnet, daß die Form (21, 22) außen eine Vertiefung in Form eines Zylinderteils (28) besitzt, die geeignet ist, sich im wesentlichen um die Rohrleitung (1) herum anzupassen, und die innen einen Raum ausspart, der im wesentlichen die vertiefte Form des Abzweigungsanschlußstückes (10) wiedergibt.

3. Vorrichtung nach Anspruch 1, dadurch gekennzeichnet, daß:
- die Form (21, 22) außen eine Vertiefung in Form eines Zylinderteils (28) besitzt, die geeignet ist, sich im wesentlichen um die Rohrleitung (1) herum anzupassen, und
- die Schalung (40) Seitenwände aufweist, von denen eine eine Rille (45) besitzt, die geeignet ist, den Eingriff der Abzweigleitung (12) quer über sie zu erlauben.

4. Vorrichtung nach Anspruch 1, dadurch gekennzeichnet, daß:
- die Mittel zum Senken und Heben der Schalung (40) mindestens einen Ständer (32, 33) aufweisen, der an einem unteren Ende (32b) einen Halteschuh (36) aufweist, der geeignet ist, unter der Rohrleitung (1) in Eingriff zu kommen, und Mittel (37) zum Aufbringen eines Druckes, die unter dem Halteschuh (36) gegenüber der Schalung (40) angeordnet sind,
- die Schalung (40) schwenkbar mit dem Ständer (32) an einer Zwischenstelle zwischen dem Halteschuh (36) und einem oberen Ende (32a) des Ständers (32) verbunden ist und Seitenwände aufweist, von denen eine eine Rille (45) besitzt, die geeignet ist, den Eingriff der Abzweigleitung (12) quer über sie zu erlauben, und
- die Form (21, 22) außen eine Vertiefung in Form eines Zylinderteils (28) besitzt, die geeignet ist, sich auf im wesentlichen dichte Weise gegenüber dem Umhüllungsmaterial unter der Wirkung der Mittel (37) zum Aufbringen eines Druckes um die Rohrleitung herum anzupassen.

5. Vorrichtung nach einem der vorhergehenden Ansprüche, dadurch gekennzeichnet, daß die Mittel zum Verschieben der zwei Matrizen (21, 22) bezüglich einander Stellantriebe (23, 24) aufweisen, die zwischen den Matrizen (21, 22) und der Schalung (40) angeordnet sind.

6. Vorrichtung nach Anspruch 4, dadurch gekennzeichnet, daß die zwei Matrizen (21, 22) aus einem elastisch verformbaren Material hergestellt sind und daß die Matrizen, wie zum Beispiel aus expandiertem Polystyrol, nach Gebrauch nicht wieder verwendbar sind, wobei die Dichtigkeit nach dem Schließen der Form durch die Verbindung der Elastizität des Materials der Form und der kombinierten Wirkung der Mittel (37) zum Aufbringen des Druckes realisiert ist.

## Claims

1. Apparatus for covering, essentially from ground level, a branch connector (10), to which there is connected a branch pipe (12), and a portion, situated in the vicinity of the connector, of a fluid distribution pipe (1) which is arranged underground and to which the connector (10) is fixed, an access pit (2) allowing the connector (10) and the pipe portion to be covered, the said apparatus comprising:
- a support (20) having an open casing (40), means (32, 33) for lowering or raising the said casing (40) in the access pit (2), and means (35) for maintaining the casing (40) relative to the pipe (1),
- a mould comprising two movable half-moulds (21, 22) located inside the casing (40),
- means (23, 24) for displacing the two half-moulds (21, 22) relative to one another, and
- an orifice (25) formed through the casing and the mould (21, 22) in order to allow a covering material to be introduced into the said mould.

2. Apparatus according to claim 1, characterised in that the mould (21, 22) has on the outside a hollow in the form of a portion of a cylinder (28), which hollow can fit substantially around the pipe (1), and has on the inside a space substantially reproducing the hollow form of the branch connector (10).

3. Apparatus according to claim 1, characterised in that:
- the mould (21, 22) has on the outside a hollow in the form of a portion of a cylinder (28), which hollow can fit substantially around the pipe (1), and
- the casing (40) has lateral walls of which one has a groove (45) allowing the branch pipe (12) to engage through it.

4. Apparatus according to claim 1, characterised in that:
- the means for lowering or raising the casing (40) comprise at least one post (32, 33) having at a lower end (32b) a support shoe (36) which is able to engage beneath the pipe (1), and means for applying a pressure (37) arranged on the said support shoe (36) facing the said casing (40),
- the casing (40) is connected in a pivoting manner to the post (32) in an intermediate location between the said support shoe (36) and an upper end (32a) of the post (32), and has lateral walls of which one has a groove (45) allowing the branch pipe (12) to engage through it, and
- the said mould (21, 22) has on the outside a hollow in the form of a portion of a cylinder (28), which hollow can fit, in a substantially tight manner with respect to the covering material, around the pipe, under the action of the said means for applying a pressure (37).

5. Apparatus according to any one of the preceding claims, characterised in that the means for displacing the two half-moulds (21, 22) relative to one another comprise jacks (23, 24) located between the half-moulds (21, 22) and the casing (40).

6. Apparatus according to claim 4, characterised in that the two half-moulds (21, 22) are made of an elastically deformable material such that the half-moulds are not re-usable after use, such as, for example, expanded polystyrene, tightness after closure of the mould being achieved by the association of the elasticity of the material of the mould and the combined action of the said means of applying pressure (37).
